# EUROPEAN PATENT APPLICATION

(11) **EP 4 810 323 A1**
(43) Date of publication of application: **23.09.2026**
(21) Application number: 25165886.0
(22) Date of filing: 25.03.2025
(51) Int. Cl.: B60R 9/06, B60R 9/10

(54) **BIKE CARRIER**

(30) Priority: 19.03.2025 CN 202510324905
(71) Applicant: Carman Enterprise Co., Ltd, Hangzhou 311121 (CN)
(72) Inventor: Li, Shuoyang, Hangzhou, 311121 (CN)
(74) Representative: Paul & Albrecht Patentanwälte PartG mbB

(57) **Abstract**

The present invention relates to a bike carrier (2) for attachment to a vehicle (1), the bike carrier (2) having
a basic structure (4) comprising, at a front end, a coupling device (8) for attachment to a vehicle (1), wherein the basic structure (4) defines a longitudinal direction (L),
at least two retaining arrangements (19), wherein each retaining arrangement (19) is designed and arranged such that it can receive and carry a bike (3), wherein the retaining arrangements (19) are spaced apart from each other in the longitudinal direction (L),
at least two support arm elements (29), which are held at the basic structure (4), wherein one support arm element (29) is assigned to each retaining arrangement (19).

## Description

The present invention relates to a bike carrier for attachment to a vehicle.

Load carriers for attachment to the rear end of a vehicle, in particular of a caravan, are often used for transporting bikes. Typically, a bike carrier comprises a basic structure which has, at its front end, a coupling device for attachment to the vehicle. Furthermore, such a bike carrier commonly has at least two, in particular exactly two or three retaining arrangements, which are arranged a such that they can receive and carry a bike. Commonly, the retaining arrangements are spaced apart from each other in the longitudinal direction, so that a plurality of bikes can be transported. Such a retaining arrangement may comprise two wheelholders, which are arranged on opposite lateral sides of the basic structure. At such a wheelholders, the wheels of a bike to be transported can be received and fixed.

In order to additionally support a bike to be transported, such bike carriers may comprise support elements, which extend upwardly from the basic structure and comprise a fastening means to connect the support element to the frame of a bike.

Such a bike carrier is for example known from EP 4 116 150 B1. This document discloses a bike carrier having a basic structure and exactly three retaining arrangements, which are spaced apart from each other in a longitudinal direction. A support arm element is assigned to each retaining arrangement in order to be connected to the frame of a bike received and carried by the corresponding retaining arrangement. In concrete terms, each support arm element is arranged in front of the corresponding retaining arrangement. Furthermore, two adjacent support elements in the longitudinal direction are spaced apart from each other laterally.

Even if such bike carriers have proven themselves in principle, there is always a need to improve the design and, in particular, make it easier to manufacture such a bike carrier.

Accordingly, it is a task of the present invention to provide an alternative bike carrier, which is in particular easy to manufacture and has a cost-effective and space-saving design.

This object is solved by a bike carrier for attachment to a vehicle, the bike carrier having a basic structure comprising, at a front end, a coupling device for attachment to a vehicle, wherein the basic structure defines a longitudinal direction, at least two, in particular exactly two or three retaining arrangements, wherein each retaining arrangement is designed and arranged such that it can receive and carry a bike, wherein the retaining arrangements are spaced apart from each other in the longitudinal direction, at least two, in particular exactly two or three support arm elements, which are held at the basic structure, wherein one support arm element is assigned to each retaining arrangement in order to be connected to the frame of a bike received and carried by the corresponding retaining arrangement, wherein fastening means are provided to connect the support arm element to a bike, wherein at least the two support arm elements assigned to the two most front retaining arrangements, in particular all the support arm elements, are held pivotably at the basic structure about a common pivot axis, which extends in the longitudinal direction.

The invention is based on the consideration to provide, assigned to each retaining arrangement, a support arm element, which additionally supports the frame of a bike when a bike is a mounted on the bike carrier. The retaining arrangements serve to receive and carry the bike; in particular they are designed such that the wheels of a bike can be positioned on and/or fixed to the retaining arrangement. The number of support arm elements may be identical to the number of retaining arrangements. The support arm elements are held pivotably about a common pivot axis at the basic structure, which reduces the complexity in design as, in particular, a common pivot pin can be used to hold the support arm elements. A common pivot axis extending in the longitudinal direction allows an easy design.

Preferably, the longitudinal direction extends from a front end to a rear end of the bike carrier. The basic structure may be, at least substantially, symmetrical with respect to a central plane. The common pivot axis may extend in this central plane, at least substantially horizontally. The longitudinal direction may extend from the coupling device, in particular from a receptacle for receiving the ball of a trailer hitch, rearwardly in particular towards the center of a license plate holder or the middle between two rear lights arranged at a rear end of the bike carrier. The longitudinal direction may correspond to the driving direction of a vehicle when the bike carrier is attached thereto.

It may be provided that the support arm elements assigned to the two most front retaining arrangements are arranged between these retaining arrangements in the longitudinal direction. This idea is based on the consideration to arrange the two most front support arm elements between the corresponding retaining arrangements in the longitudinal direction. This embodiment reduces the required space. In other words, if the bike carrier has exactly two retaining arrangements, namely a front retaining arrangement and a rear retaining arrangement, the support arm elements assigned to the retaining arrangements are arranged between the front retaining arrangement and the rear retaining arrangement in the longitudinal direction. If the bike carrier has three retaining arrangements, namely a front, a middle and a rear retaining arrangement, the support arm elements assigned to the front and middle retaining arrangements are arranged between these two. Preferably, the support arm element assigned to the rear retaining arrangement is arranged in front of the retaining arrangement. In this way, the bike, which should be mounted on the most rear retaining arrangement, can be loaded when the support arm element is in an upright operating position.

According to a preferred embodiment, the fastening means are provided at a free end of the corresponding support arm element. The fastening means may comprise a tensioning device, which is preferably held rotatably at a free end of the support arm element about a rotation axis extending perpendicularly to the lengthwise axis of the corresponding support arm element. In concrete terms, the tensioning device of the support arm element assigned to the most front retaining arrangement may extend towards the front from the lengthwise axis of the support arm element, wherein the support arm element assigned to the, when seen from the front, second retaining arrangement, the fastening means extend towards the rear from the lengthwise axis of the support arm element. Each tensioning device may comprise a base body held rotatably at the support arm element and a tensioning element connected to the base body. Preferably, the tensioning element is formed as a tensioning belt. Such a tensioning belt can be laid around the frame of a bike in order to fasten the tensioning device and, consequently, the support arm element to the bike.

Each support arm element can be moved pivotably about a pivoting angle of at least 90° in particular at least 135°, preferably about an angle of 180°. This means, that the support arm element can be pivoted from a horizontal position, in which the support arm element points away from the basic structure in a lateral direction, towards an upright position and, further on, to a horizontal position, in which the support arm element points away from the basic structure in the opposite lateral direction.

Preferably, each support arm element comprises adjustment means in order to adjust the effective length of the support arm element. This embodiment is based on the consideration to adjust the effective length of the support arm element depending on the size of the bike to be transported. More in detail, each support arm element may comprise a clamping device in order to fix the effective length of the respective support arm element. This clamping device may comprise a clamping element, for example a clamping lever, which can be moved, in particular pivoted, between a clamping position and a release position. In the clamping position, the effective length of the support arm element is fixed. In the releasing position, the effective length of the support arm element can be varied. In concrete terms, each support arm element may have an outer member, which is held pivotably at the basic structure, and an inner member, which is at least partially arranged inside the outer member so that it can be moved relative to the outer member telescopically in the lengthwise direction of the support arm element. Preferably, the fastening means are held at the inner member. The outer member and/or the inner member may have a tubular structure.

Preferably, the basic structure comprises a basic frame, which in particular has a C-shaped structure open towards the rear. The C-legs may extend parallel to each other and/or in the longitudinal direction. The central C-section may be connected to the coupling device.

The basic structure may comprise a carrying element. The carrying element may be mounted to/on the basic frame. In order to hold the support arm elements pivotably, the carrying element may hold a central pivot pin which extends in the longitudinal direction and defines the common pivot axis. The support arm elements assigned to the two most front retaining arrangements may be held pivotably at the central pivot pin.

If the bike carrier comprises a total three retaining arrangements in order to load three bikes, the basic structure may comprise a rear pivot pin, which extends in the longitudinal direction and is held at the carrying element. The rear pivot pin may extend coaxially with the central pivot pin along the longitudinal direction. The support arm element assigned to the most rear retaining arrangement may be held pivotably at the rear pivot pin.

In order to hold the central pivot pin and/or the rear pivot pin, the carrying element may have a plurality of bearing webs extending upwardly in particular in a plane perpendicularly to the longitudinal direction. The bearing webs may be spaced apart from each other in the longitudinal direction, wherein the central pivot pin and/or the rear pivot pin is/are mounted in the bearing webs. The carrying element may comprise two base tubes, which are arranged on the basic frame. Furthermore, the carrying element may comprise a plurality of metal sheet parts, which are held at or fixed to the base tubes and which form the bearing webs. The carrying element may be covered on the top by a cover element, which may be screwed to the carrying element. This cover element may comprise deepenings extending in the lateral direction in order to receive the support arm elements, when they are in a substantially horizontal position. The deepenings may extend over the entire width of the cover element and/or may be open towards both lateral sides.

Each retaining arrangement may comprise two wheelholders arranged on opposite lateral sides of the basic structure. Each wheelholder may receive and carry a wheel of a bike transported on the respective retaining arrangement. Accordingly, a bike can be positioned on the retaining arrangement such that the front wheel of a bike is received and carried by the wheelholder on one lateral side of the basic structure and the rear wheel of the bike is received and carried by the other wheelholder on the opposite lateral side of the basic structure. The wheelholders may be held pivotably, in particular at their inner end region, at the basic structure between a load bearing position, in which the wheelholder extends at least substantially horizontally and facing away from the basic structure, and a transport position, in which they extend at least substantially vertically. This embodiment is based on the consideration to be able to transport the bike carrier in a space-saving manner, when the wheelholders are in their substantially vertical transport position. The wheelholders of the retaining arrangements arranged at one lateral side may be held pivotably at the basic structure about a common swivel axis. In other words, two common swivel axes may be provided, one for all the wheelholders arranged on each lateral side. The common swivel axes may extend parallel to the common pivot axis and/or may be spaced apart laterally from the common pivot axis and/or may be arranged symmetrically with respect to a central plane.

Each wheelholder may comprise fixing means for fixing a bike, in particular a wheel of a bike, at the bike carrier. In concrete terms, the fixing means may comprise a fixing base body, which is held movably along a lengthwise axis of the wheelholder in order to adjust the wheelholder to the size of a bike to be transported. For this purpose, each wheelholder may comprise profile rails, at which the fixing base body is held movably. Preferably the fixing means comprise fixing belts, which are attached to the fixing base body such that the fixing belts can be laid around the wheel of a bike in order to fix the wheel of a bike at the fixing base body, and, consequently, at the wheelholder.

In order to facilitate the handling, in particular, when bringing the wheelholders from their load bearing position into their transport position, all the wheelholders arranged on the respective lateral side of the basic structure can be, preferably at their outwardly facing end regions, connected to each other, thus forming a common support part. In other words, one support part may be arranged on each lateral side of the bike carrier, wherein each support part comprises a plurality of wheelholders, in particular exactly two or three wheelholders.

Each support part may be provided with at least one carrying handle in its outwardly facing end region. This carrying handle may be designed and arranged in such a way that the carrying handles of both support parts can be gripped together with one hand in the transport position of the wheelholders.

The object underlying the invention is also solved by a vehicle with a bike carrier as described above.

With regard to the embodiment of the invention, reference is also made to sub-claims and to the following description of an exemplary embodiment with reference to the attach drawings. The drawings show as follows:
- Figure 1: a vehicle with a first embodiment of a bike carrier according to the invention;
- Figure 2: the bike carrier of figure 1 in a perspective view;
- Figure 3: the bike carrier of figure 1 in another perspective view;
- Figure 4: the bike carrier of figure 1 in a rear top view;
- Figure 5: the bike carrier of figure 1 in a top view;
- Figure 6: the bike carrier of figure 1 in a perspective view, wherein the wheelholders are in their transport position;

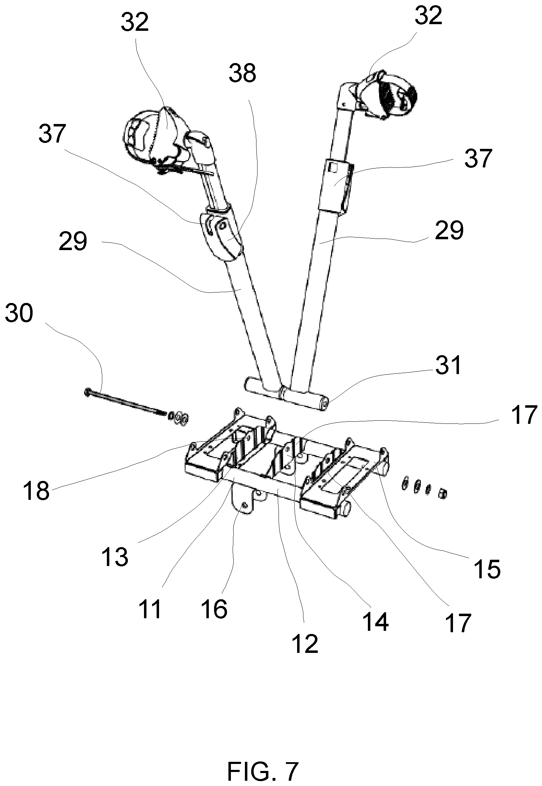

- Figure 7: the support arm elements and the carrying element of the bike carrier of figure 1 in a perspective view;
- Figure 8: the carrying element of the bike carrier of figure 1 in a perspective view;
- Figure 9: another embodiment of a bike carrier according to the invention in a perspective view;
- Figure 10: the bike carrier of figure 9 in a rear top view; and
- Figure 11: the carrying element of the bike carrier of figure 9 in a perspective view.

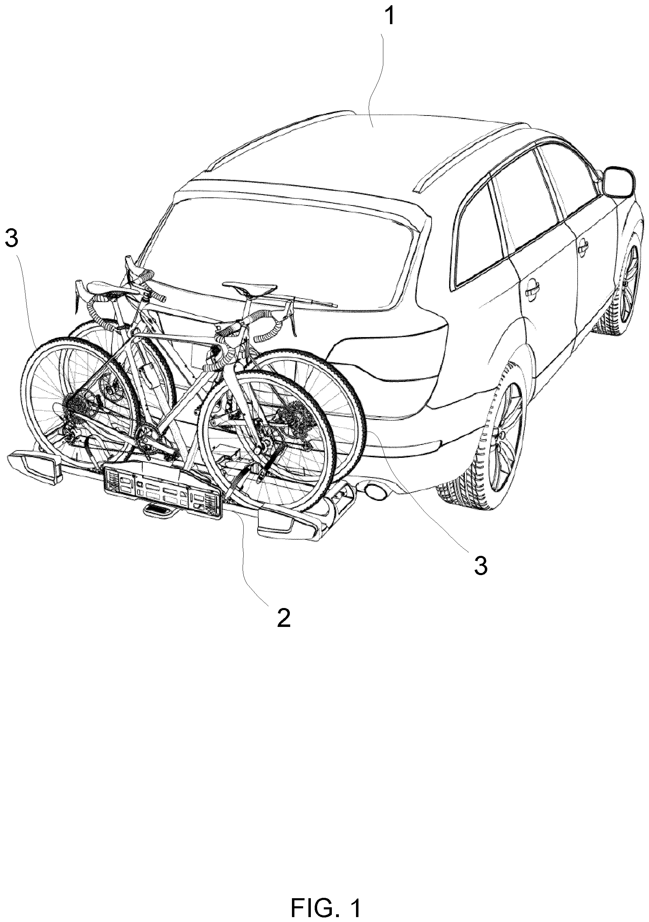

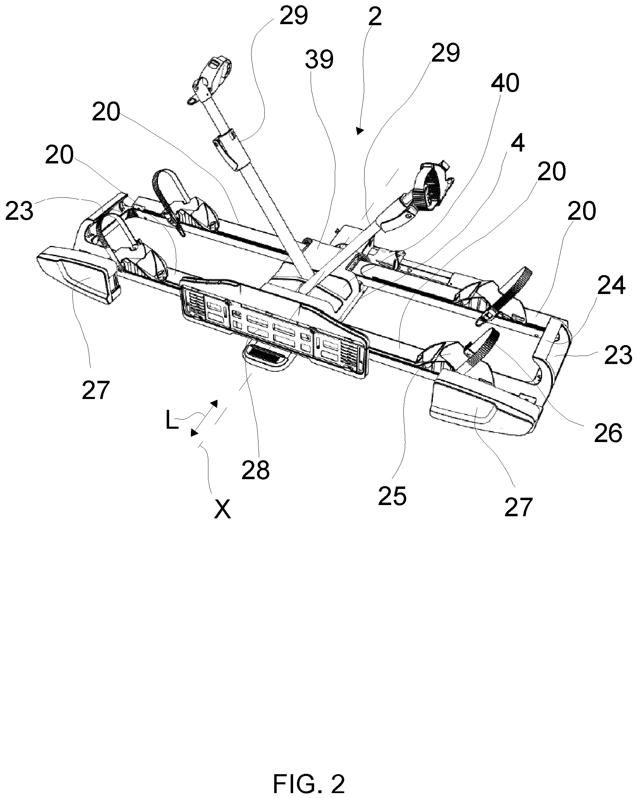

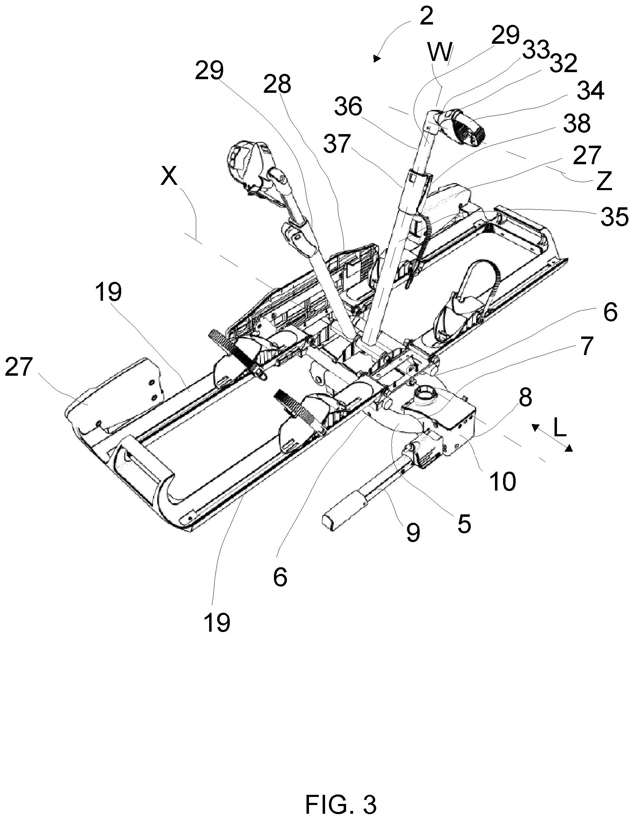

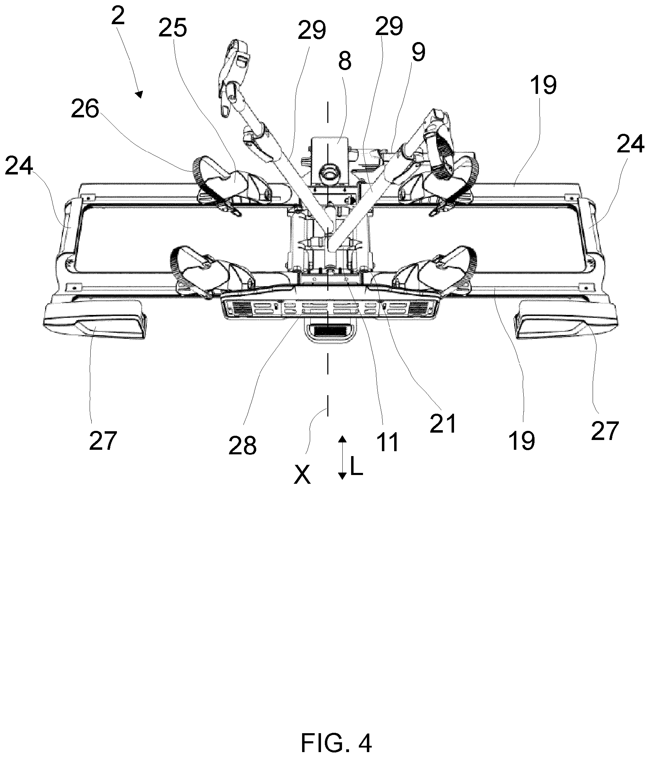

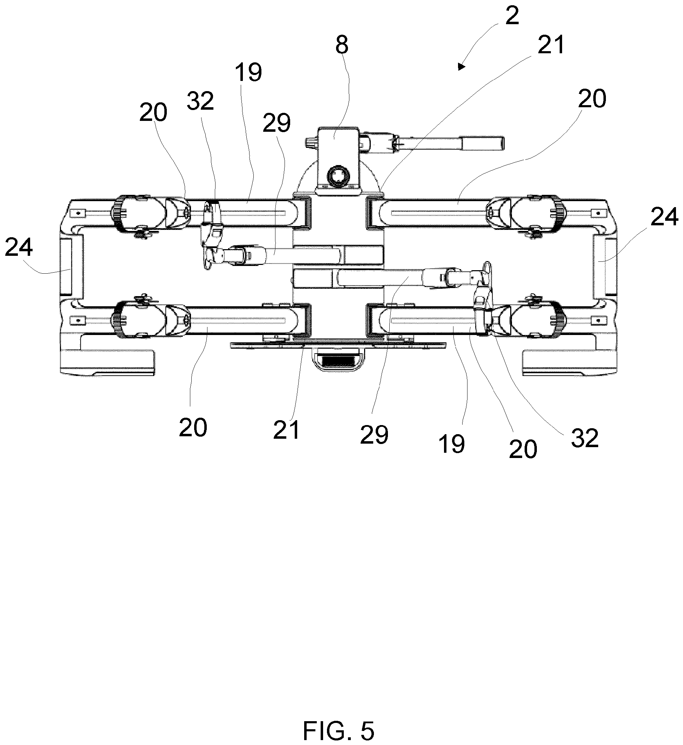

Figure 1 shows a vehicle 1 with a bike carrier 2 according to the invention attached thereto. The bike carrier 2 carries two bikes 3 and is shown in detail in Figures 2, 3, 4 and 5.

The bike carrier 3 comprises a basic structure 4. The basic structure 4 comprises a basic frame 5, which has a C-shaped structure open towards the rear. The C-legs 6 extend parallel to each other. The central C-section 7 arranged at a front end of the basic frame 5 is connected to a coupling device 8 for attachment to a vehicle side trailer hitch. The coupling device 8 comprises an actuating lever 9 and a coupling housing 10.

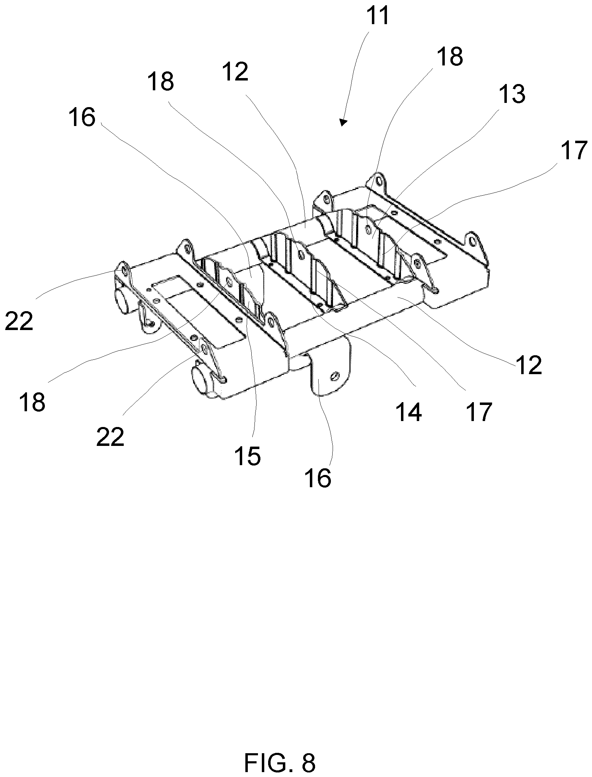

Furthermore, the basic structure 4 comprises a carrying element 11, which is shown as a separate component in Figure 8. The carrying element 11 comprises two base tubes 12, which extend parallel to each other and which carry a plurality of metal sheet parts 13, 14, 15. The base tubes 12 lie on the C-legs 6 of the basic frame 5 and are screwed thereto via fixing protrusions 16, which protrude downwardly from the base tube 12. The carrying element 11 has in total three bearing webs 17, which are formed by the metal sheet parts 13, 14, 15, which extend upwardly in a plane perpendicularly to the longitudinal direction L and are spaced apart from each other in the longitudinal direction L.

As it is visible in Figure 8, the bearing webs 17 have a bearing hole 18, wherein the bearing holes 18 of the bearing webs 17 are arranged coaxially with each other along the longitudinal direction L.

The bike carrier 2 further comprises two retaining arrangements 19, which are designed and arranged such that they can receive and carry a bike 3. The retaining arrangements 19 are spaced apart from each other in the longitudinal direction L, so that one retaining arrangement 19 is a front retaining arrangement and the other retaining arrangement 19 is a rear retaining arrangement.

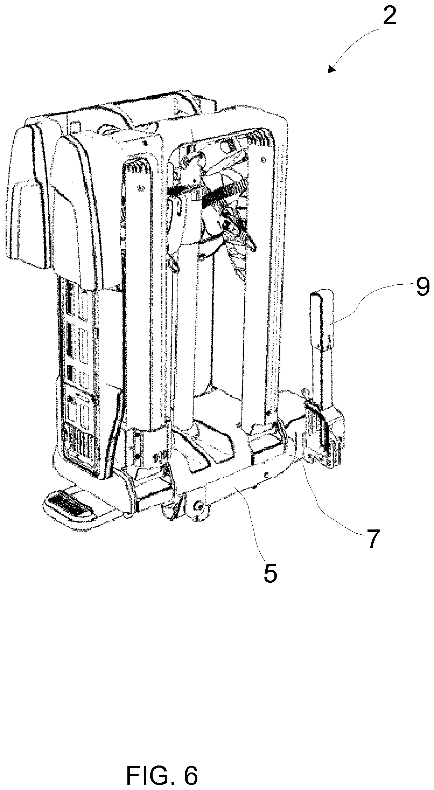

In concrete terms, each retaining arrangement 19 comprises two wheelholders 20, which are arranged on opposite lateral sides of the basic structure 4. In concrete terms, the wheelholders 20 are held at the carrying element 11 by means of a pivot pin 21, which is held in corresponding holding holes 22 formed in the carrying element 11. The wheelholders 20 arranged on each lateral side of the basic structure 4 are, at their outwardly facing end regions, connected to each other thus forming a common support part 23. Each support part 23 is provided with a carrying handle 24 in its outwardly facing end regions. The carrying handle 24 is designed and arranged in such a way that the carrying handles 24 of the support parts 23 can be gripped together with one hand in a transport position of the wheelholders 20, which is shown in Figure 6.

The support part 23 and, consequently, the wheelholders 20 assigned to the corresponding support part 23, i.e. on an lateral side of the basic structure 4, can be pivoted between a load bearing position, which is shown in Figure 2 to 5, in which the wheelholders 20 extend substantially horizontal and facing away from the basic structure 4, and a transport position, which is shown in Figure 6 and in which the wheelholders 20 extend at least substantially vertically.

Each wheelholder 20 comprises fixing means for fixing a bike. The fixing means comprise a fixing base body 25 which can be moved along a lengthwise direction of the wheelholder 20 in order to adjust the wheelholder 20 to the size of a bike to be transported. The fixing means further comprise fixing belts 26 which are attached to the fixing base body 25 such that they can be led around the wheel of a bike 3 in order to fix the wheel of the bike 3 at the fixing base body 25.

On a rear side, each support part 23 has a rear light 27. Furthermore, a license plate holder 28 is attached to the basic structure 4 at a rear end of the bike carrier 2.

The bike carrier 2 further comprises two support arm elements 29, which are held pivotably at the basic structure 4. In concrete terms a central pivot pin 30 is held at the bearing holes 18 of the carrying element 11, wherein the central pivot pin 30 defines a common pivot axis X extending in the longitudinal direction L. At their inner ends, the support arm elements 29 have a corresponding through-hole 31 through which the central pivot pin 30 extends. In the longitudinal direction L, the support arm elements 29 which define a lengthwise axis W, are arranged between the retaining arrangements 19. In concrete terms, they are arranged between the bearing webs 17 of the carrying element 11.

Fastening means are provided to connect the support arm elements 29 to the frame of a bike 3. The fastening means are arranged at the free end of the support arm elements 30 and each comprise a tensioning device 32, which is held rotatably at a free end of the support arm element 29 about a rotation axis Z extending perpendicularly to the lengthwise axis W of the corresponding support arm element 29. Each tensioning device 32 comprises a base body 33 held rotatably at the support arm element 29 and a tensioning element 34 formed as a tensioning belt connected to the base body 33.

Each support arm element 29 comprises adjustment means in order to adjust the effective length of the support arm element 29. The adjustment means serve in particular to adapt the support arm element 29 to bikes having different sizes. In concrete terms, each support arm element 29 comprises an outer tubular member 35, which is held rotatably at the basic structure 4, and an inner tubular member 36 which can be displaced relative to the outer tubular member 35 and is arranged at least partially inside the outer tubular member 35. In concrete terms, the inner tubular member 36 can be displaced telescopically with respect to the outer tubular member 35. Each support arm element 29 comprises a clamping device 37 having a clamping lever 38 in order to fix the effective length of the respective support element 29, i.e. fix the inner tubular member 36 relative to the outer tubular member 35.

Furthermore, as it is visible in Figure 2 for example, a cover element 39 is provided, which covers the carrying element 11 from the top. The cover element 39 has, in the regions of the support arm elements 29, two deepenings 40, extending transversely, so that the support arm elements 29 can be moved from a substantially horizontal position towards one lateral side until the substantially horizontal position towards the opposite lateral side, i.e. about a rotation angle of 180°.

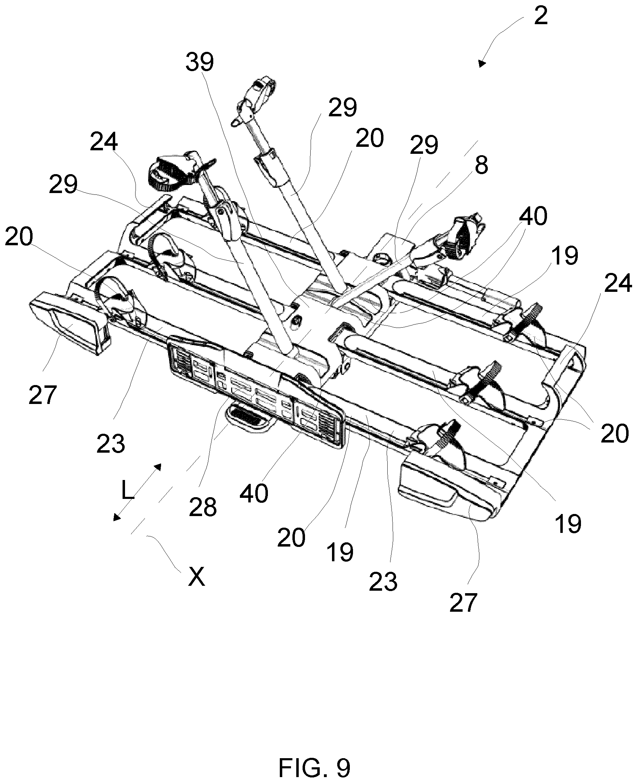

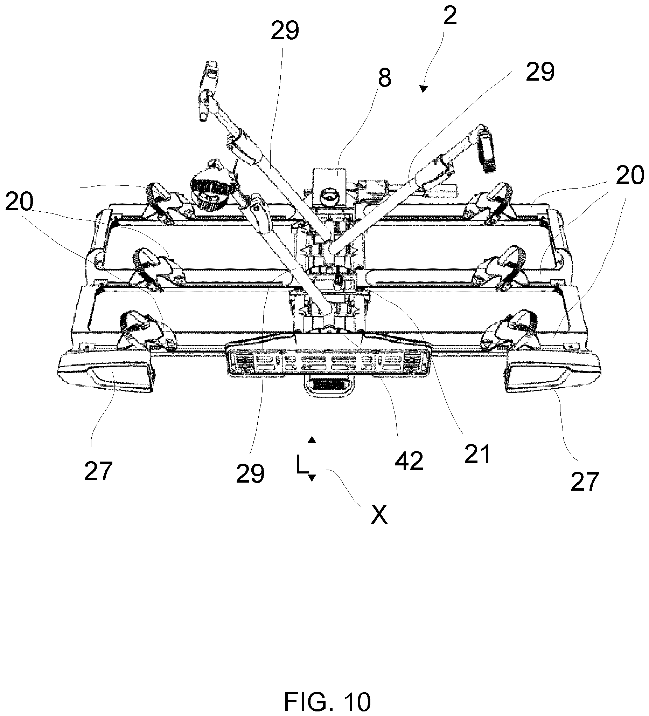

Figures 9 and 10 show another embodiment of a bike carrier 2 according to the invention. The main difference with regard to the bike carrier shown in Figure 1 to 6 is that the bike carrier 2 of Figure 9 and 10 comprises three retaining arrangements 19 spaced apart from each other in the longitudinal direction L. As it is visible in Figure 9, the bike carrier 2 comprises three support arm elements 29, wherein one support arm element 29 is assigned to each retaining arrangement 19. The support arm elements 29 assigned to the two most front retaining arrangements 19 are arranged between these retaining arrangements 19 in the longitudinal direction L. All three support arm elements 29 are held pivotably at the basic structure 4 about a common pivot axis X, which extends in the longitudinal direction L. The design of the support arm elements 29, the retaining arrangements 19 is substantially the same as at the bike carrier 2 shown in Figures 1 to 6.

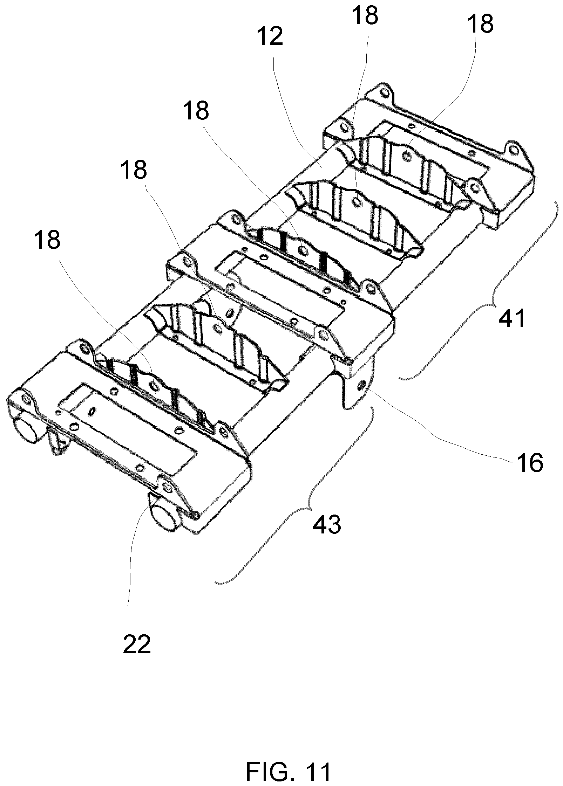

The basic structure 4 of the bike carrier 2 of Figure 9 and 10 is shown in detail in Figure 11. In a front region 41, it is basically designed in the same way as the carrying element 11 of the bike carrier 2 of Figure 1 to 6. The basic structure 4 comprises a rear pivot pin 42, which extends in the longitudinal direction L and is held at the carrying element 11. The rear pivot pin 42 extends coaxially with the central pivot pin 30 and the rear support arm element 29, i.e. the support arm element assigned to the most rear retaining arrangement 19 is held pivotably at the rear pivot pin 42. The rear pivot pin 42 is beared in the bearing webs 18 arranged at a rear region 43 of the carrying element 11.

Both embodiments of a bike carrier 2 described above have commonly that the two support arm elements 29 assigned to the two most front retaining arrangements 19, in particular all the support arm elements 29, are held pivotably at the basic structure 4 about a common pivot axis X. In this way, an easy manufacturing is possible, as, at least the two support arm elements 29 assigned to the two most front retaining arrangements 19 can be held by a common central pivot pin 30. Furthermore, a space-saving design can be realized as the support arm elements 29 assigned to the two most front retaining arrangements 19 are arranged, in the longitudinal direction L, between these retaining arrangements 19.

### LIST OF REFERENCE NUMBERS

- 1: Vehicle
- 2: Bike carrier
- 3: Bike
- 4: Basic structure
- 5: Basic frame
- 6: C-leg
- 7: Central C-section
- 8: Coupling device
- 9: Actuating lever
- 10: Coupling housing
- 11: Carrying element
- 12: Base tube
- 13: Metal sheet part
- 14: Metal sheet part
- 15: Metal sheet part
- 16: Fixing protrusion
- 17: Bearing web
- 18: Bearing hole
- 19: Retaining arrangement
- 20: Wheelholder
- 21: Pivot pin
- 22: Holding hole
- 23: Support part
- 24: Carrying handle
- 25: Fixing base body
- 26: Fixing belt
- 27: Rear light
- 28: License plate holder
- 29: Support arm element
- 30: Central pivot pin
- 31: Through hole
- 32: Tensioning device
- 33: Base body
- 34: Tensioning element
- 35: Outer tubular member
- 36: Inner tubular member
- 37: Clamping device
- 38: Clamping lever
- 39: Cover element
- 40: Deepening
- 41: Front region
- 42: Rear pivot pin
- 43: Rear region
- L: Longitudinal direction
- W: Lengthwise axis
- X: Common pivot axis
- Z: Rotation axis

## Claims

1. Bike carrier (2) for attachment to a vehicle (1), the bike carrier (2) having
a basic structure (4) comprising, at a front end, a coupling device (8) for attachment to a vehicle (1), wherein the basic structure (4) defines a longitudinal direction (L),
at least two, in particular exactly two or three retaining arrangements (19), wherein each retaining arrangement (19) is designed and arranged such that it can receive and carry a bike (3), wherein the retaining arrangements (19) are spaced apart from each other in the longitudinal direction (L),
at least two, in particular exactly two or three support arm elements (29), which are held at the basic structure (4), wherein one support arm element (29) is assigned to each retaining arrangement (19) in order to be connected to the frame of a bike (3) received and carried by the corresponding retaining arrangement (19), wherein fastening means are provided to connect the support arm element (29) to the frame of a bike (3),
wherein at least the two support arms elements assigned to the two most front retaining arrangements (19), in particular all the support arm elements (29), are held pivotably at the basic structure (4) about a common pivot axis (X), which extends in the longitudinal direction (L).

2. Bike carrier (2) according to claim 1, **characterized in that** at least one, in particular each support arm element (29) can be moved pivotably about a pivoting angle of 180°, wherein, in particular, the respective support arm element (29) can be pivoted from an horizontal position, in which the support arm element (29) points away from the basic structure (4) in a lateral direction, to an horizontal position, in which the support arm element (29) points away from the basic structure (4) in the opposite lateral direction.

3. Bike carrier (2) according to claim 1 or 2, **characterized in that** the fastening means comprise a tensioning device (32), which is preferably held rotatably at a free end of the support arm element (29) about a rotation axis (Z) extending perpendicularly to the lengthwise axis (W) of the corresponding support arm element (29).

4. Bike carrier (2) according to claim 3, **characterized in that** each tensioning device (32) comprises a base body (33) held rotatably at the support arm element (29) and a tensioning element (34) connected to the base body (33), wherein, preferably, the tensioning element (34) is formed as a tensioning belt.

5. Bike carrier (2) according to any of the preceding claims, **characterized in that** each support arm element (29) comprises adjustment means in order to adjust the effective length of the support arm element (29), wherein, in particular, each support arm element (29) may comprise a clamping device (37) in order fix the effective length of the respective support arm element (29).

6. Bike carrier (2) according to any of the preceding claims, **characterized in that** the support arm elements (29) assigned to the two most front retaining arrangements (19) are arranged between these retaining arrangements (19) in the longitudinal direction (L), and/or **in that** the support arm element (29) assigned to the most rear retaining arrangement (19) is arranged in front of the most rear retaining element in the longitudinal direction (L).

7. Bike carrier (2) according to any of the preceding claims, **characterized in that** the basic structure (4) comprises a carrying element (11), which is preferably mounted to/on the basic frame (5), wherein the carrying element (11) holds a central pivot pin (30) which extends in the longitudinal direction (L) and defines the common pivot axis (X), wherein the support arm elements (29) assigned to the two most front retaining arrangements (19) are held pivotably at the central pivot pin (30).

8. Bike carrier (2) according to claim 7, **characterized in that** the bike carrier (2) comprises in total three retaining arrangements (19), wherein the basic structure (4) comprises a rear pivot pin (42), which extends in the longitudinal direction (L) and is held at the carrying element (11), wherein the rear pivot pin (42) extends coaxially with the central pivot pin (30) along the longitudinal direction (L) and wherein the support arm element (29) is assigned to the most rear retaining arrangement (19) is held pivotably at the rear pivot pin (42).

9. Bike carrier (2) according to claim 7 or 8, **characterized in that** the carrying element (11) has a plurality of bearing webs (17) extending upwardly in a plane perpendicularly to the longitudinal direction (L) and being spaced apart from each other in the longitudinal direction (L), wherein the central pivot pin (30) and/or the rear pivot pin (42) is mounted in the bearing webs (17).

10. Bike carrier (2) according to any of the preceding claims, **characterized in that** each retaining arrangement (19) comprises two wheelholders (20) arranged on opposite lateral sides of the basic structure (4).

11. Bike carrier (2) according to claim 10, **characterized in that** each wheelholder (20) is held pivotably, in particular at its inner end region, at the basic structure (4) between a load bearing position, in which the wheelholder (20) extends at least substantially or horizontally and facing a way from the basic structure (4), and a transport position, in which they extend at least substantially vertically.

12. Bike carrier (2) according to claim 11, **characterized in that** the wheelholders (20) of the retaining arrangements (19) arranged at each lateral side, respectively, are held pivotably at the basic structure (2) about a common swivel axis, wherein both common swivel axes extend parallel to the common pivot axis of the support arm elements (29).

13. Bike carrier (2) according to any of claims 10 to 12, **characterized in that** each wheelholder (20) comprises fixing means for fixing a bike (3), in particular a wheel of a bike (3), at the bike carrier (2), wherein, in particular, the fixing means comprise a fixing base body (25), which can be moved along a lengthwise direction of the wheelholder (20) in order to adjust the wheel holder to the size of a bike (3) to be mounted, wherein, preferably, the fixing means comprises fixing belts (26), which are attached to the fixing base body (25) such that they can be laid around the wheel of a bike (3) in order to fix the wheel of the bike (3) at the fixing base body (25).

14. Bike carrier (2) according to any of claims 10 to 13, **characterized in that** all the wheelholders (20) arranged on one lateral side of the basic structure (4) are, preferably at their outwardly facing end regions, connected to each other, thus forming a common support part (23).

15. Bike carrier (2) according to claim 14, **characterized in that** each support part (23) is provided with at least one carrying handle (24) in the its outwardly facing end regions, which is designed and arranged in particular in such a way that the carrying handles (24) of the both support parts (23) can be gripped together with one hand in the transport position of the wheelholders (20).

## Amended claims

### Amended claims in accordance with Rule 137(2) EPC.

1. Bike carrier (2) for attachment to a vehicle (1), the bike carrier (2) having
a basic structure (4) comprising, at a front end, a coupling device (8) for attachment to a vehicle (1), wherein the basic structure (4) defines a longitudinal direction (L),
at least two, in particular exactly two or three retaining arrangements (19), wherein each retaining arrangement (19) is designed and arranged such that it can receive and carry a bike (3), wherein the retaining arrangements (19) are spaced apart from each other in the longitudinal direction (L),
at least two, in particular exactly two or three support arm elements (29), which are held at the basic structure (4), wherein one support arm element (29) is assigned to each retaining arrangement (19) in order to be connected to the frame of a bike (3) received and carried by the corresponding retaining arrangement (19), wherein fastening means are provided to connect the support arm element (29) to the frame of a bike (3),
**characterized in that** at least the two support arms elements assigned to the two most front retaining arrangements (19), in particular all the support arm elements (29), are held pivotably at the basic structure (4) about a common pivot axis (X), which extends in the longitudinal direction (L).

2. Bike carrier (2) according to claim 1, **characterized in that** at least one, in particular each support arm element (29) can be moved pivotably about a pivoting angle of 180°, wherein, in particular, the respective support arm element (29) can be pivoted from an horizontal position, in which the support arm element (29) points away from the basic structure (4) in a lateral direction, to an horizontal position, in which the support arm element (29) points away from the basic structure (4) in the opposite lateral direction.

3. Bike carrier (2) according to claim 1 or 2, **characterized in that** the fastening means comprise a tensioning device (32), which is preferably held rotatably at a free end of the support arm element (29) about a rotation axis (Z) extending perpendicularly to the lengthwise axis (W) of the corresponding support arm element (29).

4. Bike carrier (2) according to claim 3, **characterized in that** each tensioning device (32) comprises a base body (33) held rotatably at the support arm element (29) and a tensioning element (34) connected to the base body (33), wherein, preferably, the tensioning element (34) is formed as a tensioning belt.

5. Bike carrier (2) according to any of the preceding claims, **characterized in that** each support arm element (29) comprises adjustment means in order to adjust the effective length of the support arm element (29), wherein, in particular, each support arm element (29) may comprise a clamping device (37) in order fix the effective length of the respective support arm element (29).

6. Bike carrier (2) according to any of the preceding claims, **characterized in that** the support arm elements (29) assigned to the two most front retaining arrangements (19) are arranged between these retaining arrangements (19) in the longitudinal direction (L), and/or **in that** the support arm element (29) assigned to the most rear retaining arrangement (19) is arranged in front of the most rear retaining element in the longitudinal direction (L).

7. Bike carrier (2) according to any of the preceding claims, **characterized in that** the basic structure (4) comprises a carrying element (11), which is preferably mounted to/on the basic frame (5), wherein the carrying element (11) holds a central pivot pin (30) which extends in the longitudinal direction (L) and defines the common pivot axis (X), wherein the support arm elements (29) assigned to the two most front retaining arrangements (19) are held pivotably at the central pivot pin (30).

8. Bike carrier (2) according to claim 7, **characterized in that** the bike carrier (2) comprises in total three retaining arrangements (19), wherein the basic structure (4) comprises a rear pivot pin (42), which extends in the longitudinal direction (L) and is held at the carrying element (11), wherein the rear pivot pin (42) extends coaxially with the central pivot pin (30) along the longitudinal direction (L) and wherein the support arm element (29) is assigned to the most rear retaining arrangement (19) is held pivotably at the rear pivot pin (42).

9. Bike carrier (2) according to claim 7 or 8, **characterized in that** the carrying element (11) has a plurality of bearing webs (17) extending upwardly in a plane perpendicularly to the longitudinal direction (L) and being spaced apart from each other in the longitudinal direction (L), wherein the central pivot pin (30) and/or the rear pivot pin (42) is mounted in the bearing webs (17).

10. Bike carrier (2) according to any of the preceding claims, **characterized in that** each retaining arrangement (19) comprises two wheelholders (20) arranged on opposite lateral sides of the basic structure (4).

11. Bike carrier (2) according to claim 10, **characterized in that** each wheelholder (20) is held pivotably, in particular at its inner end region, at the basic structure (4) between a load bearing position, in which the wheelholder (20) extends at least substantially or horizontally and facing a way from the basic structure (4), and a transport position, in which they extend at least substantially vertically.

12. Bike carrier (2) according to claim 11, **characterized in that** the wheelholders (20) of the retaining arrangements (19) arranged at each lateral side, respectively, are held pivotably at the basic structure (2) about a common swivel axis, wherein both common swivel axes extend parallel to the common pivot axis of the support arm elements (29).

13. Bike carrier (2) according to any of claims 10 to 12, **characterized in that** each wheelholder (20) comprises fixing means for fixing a bike (3), in particular a wheel of a bike (3), at the bike carrier (2), wherein, in particular, the fixing means comprise a fixing base body (25), which can be moved along a lengthwise direction of the wheelholder (20) in order to adjust the wheel holder to the size of a bike (3) to be mounted, wherein, preferably, the fixing means comprises fixing belts (26), which are attached to the fixing base body (25) such that they can be laid around the wheel of a bike (3) in order to fix the wheel of the bike (3) at the fixing base body (25).

14. Bike carrier (2) according to any of claims 10 to 13, **characterized in that** all the wheelholders (20) arranged on one lateral side of the basic structure (4) are, preferably at their outwardly facing end regions, connected to each other, thus forming a common support part (23).

15. Bike carrier (2) according to claim 14, **characterized in that** each support part (23) is provided with at least one carrying handle (24) in the its outwardly facing end regions, which is designed and arranged in particular in such a way that the carrying handles (24) of the both support parts (23) can be gripped together with one hand in the transport position of the wheelholders (20).
